Europäisches Patentamt

European Patent Office

Office européen des brevets

(19)

(11) Numéro de publication : **0 119 123 B2**

(12) # NOUVEAU FASCICULE DE BREVET EUROPEEN

(45) Date de publication du nouveau fascicule du brevet : **19.06.91 Bulletin 91/25**

(51) Int. Cl.⁵ : **G01M 1/22**

(21) Numéro de dépôt : **84400354.1**

(22) Date de dépôt : **21.02.84**

(54) Equilibreuse, notamment pour roues de véhicules automobiles.

(30) Priorité : **28.02.83 FR 8303272**

(43) Date de publication de la demande :
**19.09.84 Bulletin 84/38**

(45) Mention de la délivrance du brevet :
**24.06.87 Bulletin 87/26**

(45) Mention de la décision concernant
l'opposition :
**19.06.91 Bulletin 91/25**

(84) Etats contractants désignés :
**DE GB IT SE**

(56) Documents cités :
**DE-A- 1 947 090**

(56) Documents cités :
**DE-B- 1 238 240**
**DE-C- 2 732 738**
**US-A- 4 352 291**
**Dionys Hofmann, "Grundlagen zum Auswuchten von drehenden Werkstücken" de Technische Runschau Bern no.33/1957, pages 1,2.**

(73) Titulaire : **FACOM, Société dite:**
**6 et 8 Rue Gustave Eiffel**
**F-91423 Morangis Cédex (FR)**

(72) Inventeur : **Brihier, Gérard Charles Camille**
**43 Rue de la Source Ollainville**
**F-91290 Arpajon (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention est relative à l'équilibrage de corps rotatifs tels que les roues des véhicules, et elle concerne plus particulièrement les équilibreuses de roues du type comprenant un arbre monté rotatif tans des paliers qui sont fixés sur un bâti par l'intermédiaire d'organes élastiquement déformables, l'arbre étant couplé à des **moyens** d'entraînement lui permettant d'atteindre une vitesse suffisante pour l'équilibrage d'une roue fixée à l'une de ses extrémités, des capteurs permettant la mesure du balourd à corriger du corps rotatif.

L'article de M. Hofmann paru dans la revue "Technischen Rundschau" de 1957 décrit et représente une équilibreuse comportant deux lames de ressort qui sont disposées axialement par rapport à l'arbre en étant diamétralement opposées et ont leur raideur la plus faible dans un plan commun diamétral de cet arbre, et un capteur de mesure du mouvement oscillant du palier qui est articulé à la jonction de ce dernier et de l'une des lames de ressort.

Il est également connu de fixer des capteurs de mesure d'effort sur les organes élastiquement déformables.

Une telle équilibreuse qui est décrite dans le brevet US-A-4 352 291 et représentée sur la Fig.1 des dessins annexés, montre schématiquement et en perspective une équilibreuse connue de ce type comprenant un bâti 1 sur lequel sont fixés des paliers 2 par l'intermédiaire d'organes 3 élastiquement déformables disposés symétriquement par rapport à un plan médian des paliers. Les paliers qui sont alignés reçoivent à rotation un arbre 4 à une extrémité 5 duquel est fixé un plateau (non représenté) de fixation d'une roue à équilibrer. Cet arbre est entraîné en rotation grâce à une transmission comportant une poulie menée 6, une courroie crantée 7 et une poulie menante 8, celle-ci étant entraînée par un moteur électrique 9 solidaire du bâti 1. Des capteurs 10 tels que des jauges de contraintes, sont fixés sur les organes élastiquement déformables ou lames 3 pour en mesurer les déformations lorsque l'arbre et la roue sont entraînés en rotation. Si la roue présente un balourd, celui-ci peut ainsi être mesuré puis corrigé par une masse d'équilibrage d'une façon bien connue dans la technique.

Pour éviter que de légères variations de la vitesse de rotation de l'arbre 4 puissent venir perturber le résultat de la mesure en apportant une certaine contribution à la déformation des lames 3, il est préférable d'utiliser **une transmission à courroie,** car dans ces conditions, on peut utiliser une poulie menée d'un diamètre important avec laquelle peut engrèner la courroie sur un angle important. De la sorte, l'engrènement se fait sur un nombre de dents important ce qui permet de réduire considérablement les variations parasites de la vitesse de l'arbre.

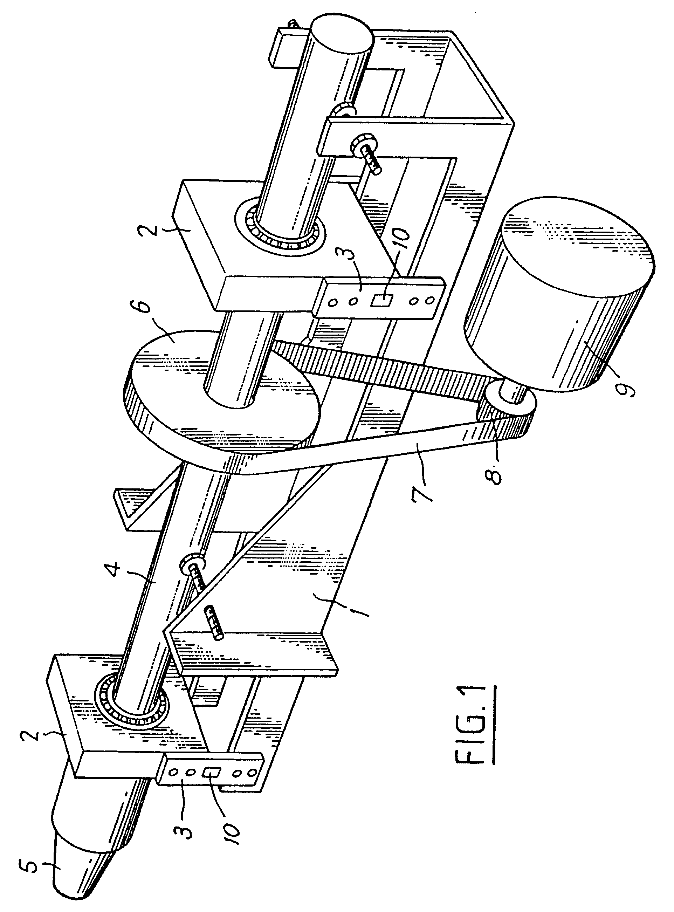

Cependant, une transmission à courroie ne permet pas d'utiliser des rapports de réduction élevés pour un encombrement de l'équilibreuse compatible avec la pratique (on ne peut guère aller au delà de 3, de sorte que le moteur électrique d'entraînement doit avoir une vitesse de rotation comparativement faible, d'où une puissance relativement élevée. Par exemple, dans une équilibreuse du type de la Fig. 1, cette puissance doit être de l'ordre de 600 Watt.

Les irrégularités en couple et en vitesse sur l'arbre perturbent la mesure du balourd en raison du fait que les lames élastiques peuvent se déformer par suite de mouvements oscillatoires des paliers dans des plans qui sont perpendiculaires à l'axe de l'arbre 4. Par contre, dans le sens axial les lames 3 sont pratiquement indéformables et aucune perturbation axiale ne peut donc influencer la mesure.

Or, il serait souhaitable pour des raisons d'encombrement et de prix de revient de supprimer l'entraînement par pignons et courroie en le remplaçant par exemple par une transmission à pignon et roue dentée. Cependant, un pignon n'entraîne la roue dentée (calée sur l'arbre) que sur une dent à la fois, d'ou une oscillation importante de la vitesse de rotation de l'arbre provoquée par le passage d'une dent à l'autre au cours de la rotation du pignon et de la roue. En raison de l'influence directe de cette oscillation sur le résultat de la mesure, on a donc renoncé dans le passé à utiliser une telle transmission alors que son faible coût pourrait réduire considérablement celui de l'équilibreur dans son ensemble.

L'invention a donc pour but de fournir une équilibreuse qui remédie aux inconvénients de la technique antérieure et qui permette, d'une part de supprimer pratiquement totalement les influences parasites sur la mesure du balourd et, d'autre part (et par voie de conséquence) d'utiliser une transmission simple et peu coûteuse entre le moteur d'entraînement et l'arbre.

L'invention a donc pour objet une équilibreuse du type ci-dessus qui est caractérisée en ce que les dits organes élastiquement déformables sont disposés axialement par rapport à l'arbre dans des positions respectives diamétralement opposés et ont des axes de symétrie longitudinaux qui sont situés à peu près dans un même plan axial de l'arbre définissant un plan de mesure dans lequel ces organes élastiquement déformables ont la raideur la plus faible, tandis qu'ils ont une raideur très élevée selon un plan axial perpendiculaire au dit plan de mesure, et en ce que les capteurs de mesure sont fixés sur les organes élastiquement déformables de manière que leur direction de sensibilité maximale coïncide avec le dit plan de mesure, toute perturbation de direction située dans le plan axial perpendiculaire au plan de mesure étant ainsi éliminée.

Il résulte de ces caractéristiques une meilleure précision de la mesure.

Suivant une caractéristique avantageuse de l'invention, il est prévu entre le moteur d'entraînement et l'arbre une transmission à pignon et roue dentée.

Cette caractéristique très avantageuse permet non seulement de réduire le coût de l'équilibreuse par suite de la suppression d'une transmission à courroie crantée, mais également de réduire la puissance du moteur d'entraînement dont la vitesse de rotation peut être choisie à une valeur comparativement élevée.

L'invention sera mieux comprise à la lecture de la description, qui va suivre, de plusieurs modes de réalisation, description faite en référence aux dessins annexés. Sur ces dessins :

la fig. 1 montre une vue en perspective d'une équilibreuse de roues suivant la technique antérieure ;

la fig. 2 est une vue en perspective schématique d'une équilibreuse suivant l'invention ;

la fig. 3 est une vue en coupe radiale, prise à plus grande échelle, suivant la ligne 3-3 de la fig. 2 ;

la fig. 4 est une vue en coupe axiale, à plus petite échelle que la fig. 3, d'une partie du tube support de l'arbre ;

la fig. 5 représente, à une autre échelle, une vue extérieure du tube support ;

les fig. 6 et 7 représentent, par des vues en perspective schématiques, deux variantes du tube support ;

les fig. 8 à 11 représentent, par des vues en coupe analogues à celle de la fig. 4, quatre autres variantes possibles de l'invention.

la fig. 12 est une vue en perspective partielle d'une autre variante du tube support.

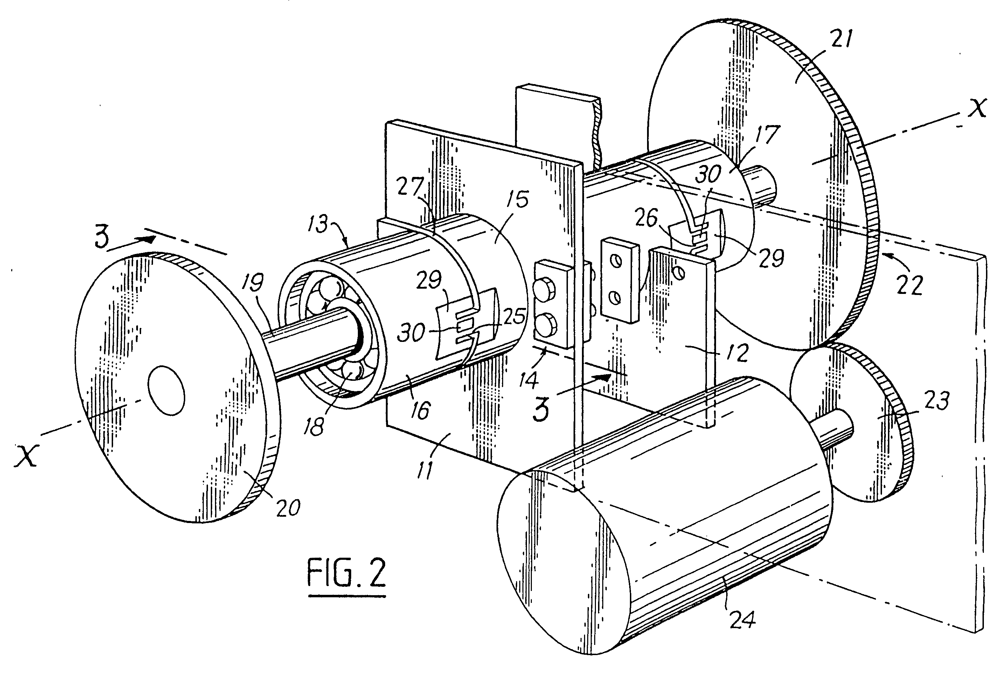

Les fig. 2 à 5 représentent un premier mode de réalisation de l'invention que l'on va maintenant décrire en détail.

L'équilibreuse suivant l'invention comporte un bâti dont on ne voit sur la fig. 2 que deux plaques de montage verticales 11 et 12 dans lesquelles est fixé rigidement un corps tubulaire ou tube support 13 à l'aide de dispositifs de fixation 14, le tube support étant ici de section circulaire, son axe X-X étant orienté horizontalement. Il est à noter que l'invention n'est pas limitée à une section circulaire du tube support.

Le tube support comporte une partie médiane 15 et deux parties terminales 16 et 17 destinées à recevoir des paliers 18, qui à leur tour servent au montage à rotation d'une broche 19 qui peut ainsi tourner autour de son axe horizontal par rapport aux plaques 11 et 12 du bâti. L'axe de la broche 19 coïncide avec l'axe X-X du tube support 13. Un plateau 20 destiné à recevoir une roue à équilibrer est fixé sur l'une des extrémités de la broche. Il peut avoir toute construction connue et ne fait pas partie de l'invention.

A l'extrêmité opposée de la broche, il est prévu une roue dentée 21 d'une transmission 22 qui comporte par ailleurs un simple pignon 23 engrénant avec la roue dentée 21. Ce pignon est calé sur l'arbre de sortie d'un moteur d'entraînement 24 fixé sur l'une des plaques de montage 11.

Sur la fig. 5 en particulier, on voit que le tube 13 est réalisé en une seule pièce, cependant que la partie médiane 15 fixée au bâti n'est reliée à chaque partie terminale respective 16 ou 17 que par deux pattes de liaison 25 et 26 diamétralement opposées qui forment chacune l'un des organes élastiquement déformables de la suspension de la broche 19.

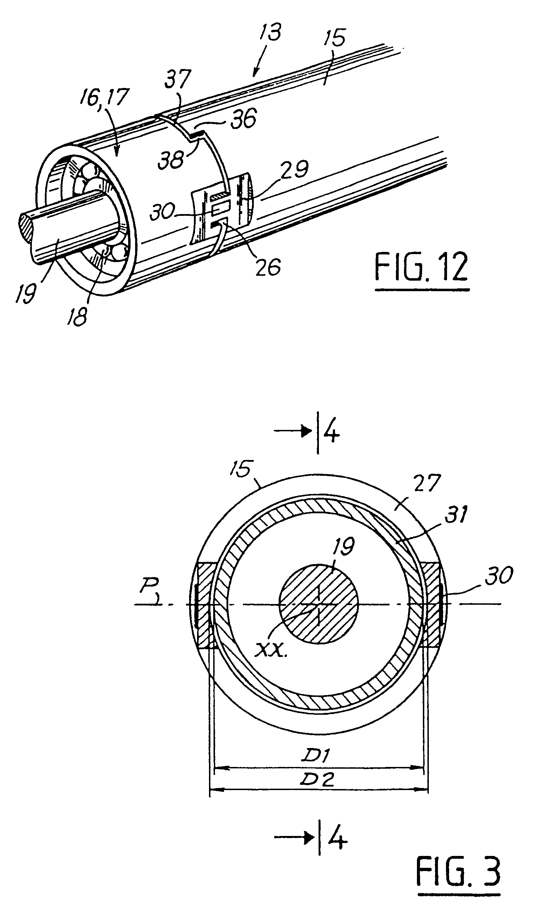

De préférence, ces pattes de liaison ou organes élastiquement déformables sont ménagées dans le tube par des fentes formant deux incisions radiales diamétralement opposées 27 et deux incisions axiales 28 d'une longueur correspondant à celle souhaitée des pattes de liaison. Ainsi, celles-ci ont une certaine étendue circonférentielle et sont disposées dans des positions diamétralement opposées comme représenté clairement sur la fig. 3. En outre, à l'endroit de chaque patte de liaison, il est prévu un méplat 29 permettant d'ajuster l'élasticité de chaque patte par un choix judicieux de la profondeur de fraisage et également de monter facilement sur cette patte une jauge de mesure 30.

La fig. 3 montre que les pattes de liaison sont disposées symétriquement par rapport à un plan qui est le plan de mesure et qui passe par l'axe X-X de la broche 19.

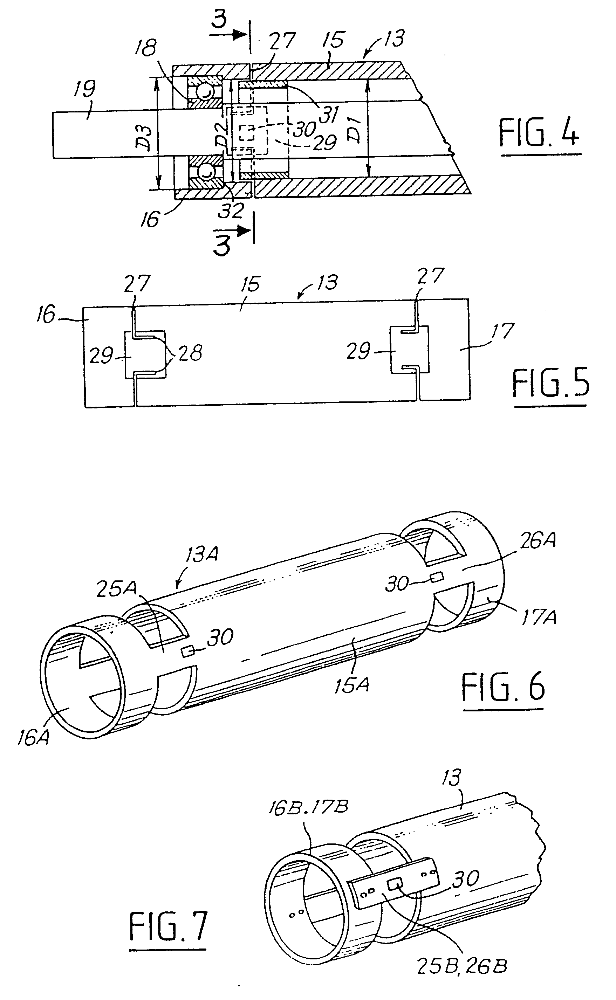

Sur la fig 4, on voit que le diamètre intérieur du tube 13 n'est pas constant. Ainsi l'alésage de la partie médiane 15 présente un diamètre D1 auquel est d'ailleurs ajusté à frottement dur, celui extérieur d'une bague de butée 31 qui est insérée dans cet alisage tout en faisant saillie dans la partie terminale 16 ou 17. (Il est à noter que les deux extrêmités du tube 13 peuvent présenter le même agencement, bien que l'extrêmité du tube support se trouvant près de la roue dentée 21 soit moins exposée aux détériorations dues aux chocs subis par le plateau 20.)

Chaque partie terminale 16 ou 17 présente elle-même une portion de daamétre D2 plus grand que le diamètre D1 et une portion d'extrémité de diamètre D3 avec D1 < D2 < D3. Un épaulement radial 32 est ainsi menagé dans la partie terminale 16 ou 17 pour servir d'appui au palier 18 correspondant.

Du fait que la portion intérieure de diamètre D2 entoure partiellement la bague de butée 31, l'amplitude d'un mouvement d'oscillation d'une partie terminale 16 ou 17 par rapport à la partie médiane 15 est limitée à une valeur qui évite le dépassement de la limite élastique des pattes de liaison 25 et 26.

Les portions de liaison 25 et 26 ont une faible raideur dans une direction située dans le plan de mesure (P) et une raideur élevée s'opposant à toute déformation dans une direction perpendiculaire à ce plan (P) et ce, d'autant plus que leur étendue angulaire sera plus grande. Il en résulte que toute sollicitation selon la direction perpendiculaire au plan de mesure (P) est éliminée et devient négligeable au niveau des jauges de mesure 30. Celles-ci sont fixées sur les pattes de liaison de telle manière que leur direction de sensibilité préférentielle soit située dans le plan de mesure et que toute perturbation dont la direction est orientée perpendiculairement au plan de mesure, soit rejetée. Le résultat de la mesure du balourd de l'objet à équilibrer sera donc dépourvu d'influences parasites.

Comme décrit ci-dessus, il devient alors possible d'utiliser un simple train d'engrenages comme transmission 22 entre le moteur 24 et la broche 19 autorisant l'utilisation d'un rapport de réduction élevé et d'un moteur tournant à grande vitesse. A titre d'exemple, on peut employer un moteur de 120 W tournant à 1500 t/m et imprimant à la broche une vitesse de 200 à 300 t/m.

La fig. 6 représente une première variante du tube support. Celui-ci indiqué par la référence 13A comporte une partie médiane 15A, des parties terminales 16A et 17A ainsi que des pattes de liaison 25A et 26A recevant les jauges de mesure 30. On voit que dans cette variante les pattes de liaison sont ménagées respectivement par deux encoches 27A d'une étendue axiale égale à celle des pattes de liaison 25A et 26A.

Alors que les tubes 13 et 13A des fig. 5 et 6 sont d'un seule pièce, il est possible de prévoir un tube support 13B composite tel que représenté sur la fig. 7. Dans ce cas, il est prévu une partie médiane fixe 15B et deux parties terminales 16B (et 17B non visible sur le dessin) qui sont rattachées à la partie médiane 15B par des pattes de liaison rapportées 25B (et 26B). Ces pattes de liaison constituent, ici également, les organes élastiquement déformables et supportent les jauges de mesure 30.

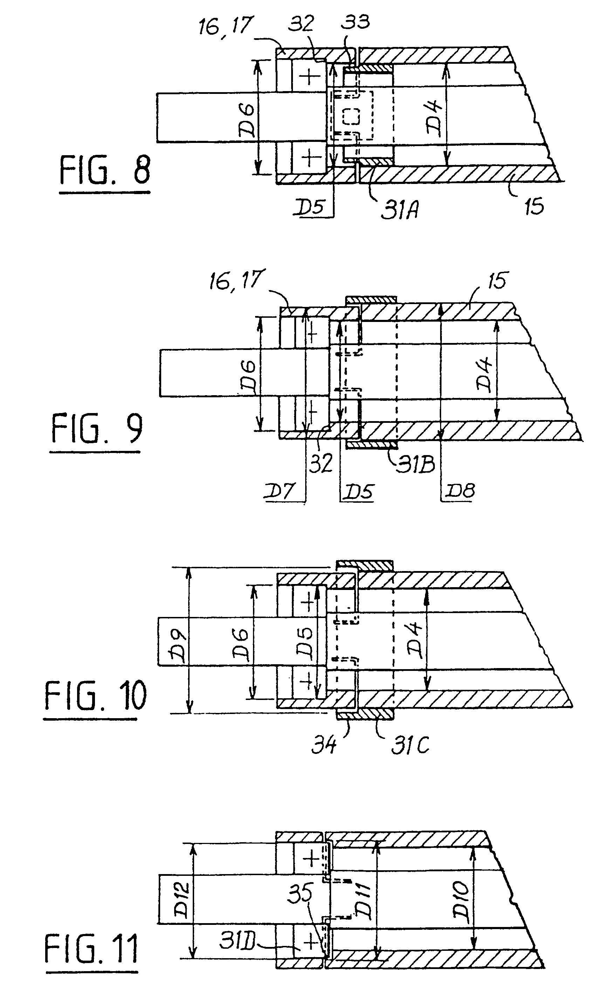

Les fig. 8 à 11 montrent quatre variantes possibles (non-exhaustives) de la butée de sécurité protégeant la suspension de la broche contre les chocs. Dans ces variantes, le tube support est réalisé d'une seule pièce comme sur le fig. 5 et présente des incisions perpendiculaires 27 et 28 propres à ce mode de réalisation.

Sur la fig. 8, l'alésage de la partie médiane 15 du tube support présente un diamètre intérieur D4 égal à celui d'une portion intérieure de la partie terminale 16 ou 17, celle-ci présentant en outre une portion d'extrémité de diamètre intérieur D6 supérieur aux diamètres D4 et D5. Dans cette variante, il est prévu une bague de butée 31A étagée, insérée à frottement dur dans l'alésage de la partie médiane 15 mais en dépassant par un collier 33 de diamètre inférieur à celui D4 de l'alésage.

Dans la variante de la fig. 9, il est prévu une bague de butée 31B de diamètre intérieur uniforme mais ajusté à frottement dur sur le diamètre extérieur de la partie médiane 15 du tube support 13. Pour conférer aux parties terminales 16 et 17 une certaine liberté d'oscillation, leur diamètre extérieur D7 est légèrement plus faible que celui D8 de la partie médiane 15. Les diamètres intérieurs du tube support sont ici identiques à ceux représentés sur la fig. 8.

Dans la variante de la fig. 10, il est prévu également une bague de butée extérieure 31C ajustée à frottement dur sur la partie médiane 15 du tube et présentant un collier saillant 34 d'un diamètre D9 supérieur au diamètre (uniforme) du tube support 13.

Selon la variante de la fig. 11, c'est le palier 18 qui fait office de bague de butée 31D. Dans ce cas, un dégagement de diamètre D11 formé par une rainure annulaire 35 est ménagé dans la zone de jonction entre la partie médiane 15 et la partie terminale 16 ou 17. Le diamètre D11 est supérieur au diamètre D12 des parties terminales, lui-même plus grand que le diamètre intérieur D10 de la partie médiane 15.

La variante de la fig. 12 comporte une butée de protection contre les chocs qui est ménagée dans le tube support lui-même. A cet effet, à l'interface entre la partie médiane 15 et la partie terminale 16 ou 17, on a prévu dans la fente 27 un tracé en U qui délimite dans la partie médiane une languette 26 qui est en saillie dans une encoche 37 pratiquée dans la partie terminale. Les bords orientés axialement 38 de cette languette et de l'encoche forment ainsi des surfaces de butées remplissant le même rôle que les bagues de butées décrites précédemment. Bien entendu, des ensembles d'une languette et d'une encoche peuvent être prévus dans des portions diamétralement opposées décalées de 90° angulaires par rapport aux pattes de liaison qui sont situées dans le plan axial de mesure.

Dans toutes les variantes décrites ci-dessus, il est prévu une jauge de mesure par organe élastiquement déformable. Toutefois, il peut suffire de n'en prévoir qu'une seule par paire de pattes de liaison, c'est-à-dire l'une pour la mesure du balourd dans le plan extérieur d'une roue de véhicule et l'autre pour le plan intérieur, car aucune compensation n'est nécessaire entre les jauges diamétralement opposées du fait de la déformation identique dans les pattes de liaison de chaque paire 25 ou 26.

Grâce à la disposition des paliers dans un même tube support, l'alignement de ces paliers peut être très précis et éliminer ainsi un défaut que l'on rencontre habituellement dans les équilibreuses classiques.

**Revendications**

1. Equilibreuse de corps destinés à être entraînés en rotation tels que des roues de véhicules, du type comprenant un arbre (19) monté rotatif dans des paliers (18) qui sont fixés sur un bâti (11, 12) par l'intermédiaire d'organes (25, 26 ; 25A, 26A ; 25B, 26B), l'arbre étant couplé à des moyens d'entraînement (22) lui permettant d'atteindre une vitesse suffisante pour l'équilibrage d'une roue fixée à l'une de ses extrémités (20), des capteurs de mesure d'effort (30) étant fixés sur les organes (25, 26 ; 25A, 26A ; 25B, 26B) qui sont élastiquement déformables et disposés symétriquement par rapport à un plan diamétral de l'arbre, pour permettre la mesure du balourd à corriger du corps rotatif, cette équilibreuse étant caractérisée en ce que les dits organes (25, 26 ; 25A, 26A ; 25B, 26B) élastiquement déformables sont disposés axialement par rapport à l'arbre (19) dans des positions respectives diamétralement opposées, et ont des axes de symétrie longitudinaux situés à peu près dans un même plan axial (P) définissent un plan de mesure dans lequel les dits organes élastiquement déformables ont la raideur la plus faible, tandis qu'ils ont une raideur élevée selon le plan axial perpendiculaire au dit plan de mesure (P), de manière connue en soi et en ce que la direction de sensibilité maximale des dits capteurs de mesure (30) coïncide avec le dit plan de mesure (P) pour permettre l'élimination de tout effort perturbateur orienté perpendiculairement au plan axial de mesure.

2. Equilibreuse suivant la revendication 1, caractérisée en ce que les dits organes élastiquement déformables (25, 26 ; 25A, 26A ; 25B, 26B) sont formés par des pattes de liaison s'étendant entre le dit bâti (11, 12, 15) et des éléments annulaires (16, 17 ; 16A, 17A ; 16B, 17B) dans lesquels sont montés respectivement les paliers (18) du dit arbre (19).

3. Equilibreuse suivant la revendication 2 caractérisée en ce que les dits éléments annulaires (16, 17 ; 16A, 17A) sont venus de matière avec les dites pattes de liaison (25, 26 ; 25A, 26A).

4. Equilibreuse suivant la revendication 3 caractérisée en ce que les éléments annulaires (16, 17 ; 16A, 17A) de support de palier et les pattes de liaison (25, 26 ; 25A, 26A) sont réalisés d'un seul tenant avec un élément tubulaire médiane (15) solidaire du bâti.

5. Equilibreuse suivant la revendication 4 caractérisée en ce que le corps tubulaire (13, 13A) formé par les dits éléments annulaires et le dit élément médiane (15) présentent une section circulaire, son axe (X-X) coïncidant avec celui du dit arbre (19).

6. Equilibreuse suivant la revendication 2 caractérisée en ce que les dites pattes de liaison (25B, 26B) sont rapportées sur le bâti (11, 12, 15) et sur les dits éléments annulaires (16B, 17B).

7. Equilibreuse suivant la revendication 5 caractérisée en ce que le dit corps tubulaire (13) présente des méplats parallèles (29) dans les zones où sont situées les pattes de liaison respectives diamétralement opposées (16 ou 17, fig. 7).

8. Equilibreuse suivant l'une quelconque des revendications 5 et 7 caractérisée en ce que la séparation entre les éléments annulaires terminaux (16, 17) et l'élément médiane (15) est définie par deux fentes radiales (27) diamétralement opposées rejoignant chacune deux fentes axiales (28) définissant respectivement des bords correspondants latéraux de chaque paire de pattes de liaison diamétralement opposées (25, 26).

9. Equilibreuse suivant l'une quelconque des revendications 5 et 7 caractérisée en ce que le dit corps tubulaire (13A) comprend deux découpes périphériques dont l'étendue axiale correspond à la longueur axiale des pattes de liaison (25A, 26A ; fig. 6).

10. Equilibreuse suivant l'une quelconque des revendications 5 à 9 caractérisée en ce qu'il est prévu un organe de butée (31, 31A ; 31B ; 31C ; 31D ; 36, 37, 38) pour maintenir la déformation des dites pattes de liaison en dessous de leur limite de déformation permanente.

11. Equilibreuse suivant la revendication 10 caractérisée en ce que le dit organe de butée est une bague disposée à l'intérieur ou à l'extérieur du dit corps tubulaire (13 ; 13A ; 13B) et chevauchant la séparation entre le dit élément médian (15) et les dits éléments annulaires (15, 17 ; 16A, 17A ; 16B, 17B) de support de palier.

12. Equilibreuse suivant la revendication 10 caractérisée en ce que la dite bague de butée est formée par le palier (34D) de l'élément annulaire de support de palier correspondant (fig 11).

13. Equilibreuse suivant la revendication 10 lorsqu'elle dépend de la revendication 8, caractérisée en ce que chacune des dites fentes radiales (27) présente une portion en forme de U définissant une languette (36) s'étendant axialement dans une encoche complémentaire (37) prévues respectivement à la jonction entre le ou les éléments annulaires (16, 17) et l'élément médian (15) du corps tubulaire (13) et en ce que cette portion en forme de U de la dite fente radiale est décalée angulairement de 90° par rapport aux dites pattes de liaison correspondantes, pour définir le dit organe de butée.

14. Equilibreuse suivant l'une quelconque des revendications précédentes caractérisée en ce que les dits moyens d'entraînement (22, 24) comportent un train d'engrenages (21, 23).

## Ansprüche

1. Auswuchtvorrichtung für einen Körper, welcher wie die Räder eines Kraftfahrzeuges in Rotation versetzt wird, mit einer Welle (19), welche drehbar in Lagern (18) gelagert ist, die mittels Zwischenelementen (25, 26 ; 25A, 26A ; 25B, 26B) an einem Rahmen befestigt sind, wobei die Welle mit Antriebselementen (22) gekuppelt ist, um eine für das Auswuchten eines an dem einen Ende der Welle befestigten Rades ausreichende Geschwindigkeit zu erreichen, und mit an den Zwischenelementen (25, 26 ; 25A, 26A ; 25B, 26B) angeordneten Meßwertgebern (30), wobei die Zwischenelemente elastisch verformbar und zu einer Durchmesserebene der Welle (19) symmetrisch angeordnet sind, so daß die Messung der zu korrigierenden Unwucht des rotierenden Körpers möglich ist, dadurch gekennzeichnet, daß die elastisch verformbaren Zwischenelemente (25, 26 ; 25A, 26A ; 25B, 26B) axial zu der Welle (19) einander gegenüberliegend angeordnet sind und Längssymmetrieachsen aufweisen, welche ungefähr in der gleichen axialen Ebene (P) liegen, die eine Meßebene bestimmt, in welcher die elastisch verformbaren Elemente die geringste Steifigkeit aufweisen, während sie in der zur Meßebene (P) senkrechten axialen Ebene eine hohe Steifigkeit aufweisen, in an sich bekannter Weise, und daß sich die Richtung maximaler Empfindlichkeit der Meßwertgeber (30) mit der Meßebene (P) deckt, so daß alle senkrecht zur axialen Meßebene ausgerichteten Störbelastungen ausgeschaltet werden.

2. Auswuchtvorrichtung nach Anspruch 1, dadurch **gekennzeichnet**, daß die elastisch verformbaren Elemente (25, 26 ; 25A, 26A ; 25B, 26B) von sich zwischen dem Rahmen (11, 12, 15) und ringförmigen Elementen (16, 17 ; 16A, 17A ; 16B, 17B) erstreckenden Verbindungsteilen gebildet werden, wobei in den ringförmigen Elementen jeweils die Lager (18) der Welle (19) angeordnet sind.

3. Auswuchtvorrichtung nach Anspruch 1, dadurch **gekennzeichnet**, daß die ringförmigen Elemente (16, 17 ; 16A, 17A) aus einem Stück mit den Verbindungsteilen (25, 26 ; 25A, 26A) bestehen.

4. Auswuchtvorrichtung nach Anspruch 3, dadurch **gekennzeichnet**, daß die ringförmigen Elemente (16, 17 ; 16A, 17A) der Lagerträger und die Verbindungsteile (25, 26 ; 25A, 26A) einstückig mit einem mit der Welle verbundenen röhrenförmigen, mittleren Element (15) ausgebildet sind.

5. Auswuchtvorrichtung nach Anspruch 4, dadurch **gekennzeichnet**, daß der aus den ringförmigen Elementen und dem mittleren Element (15) bestehende röhrenförmige Körper (13, 13A) einen kreisförmigen Abschnitt darstellt, wobei seine Achse (X-X) mit der Welle (19) zusammenfällt.

6. Auswuchtvorrichtung nach Anspruch 2, dadurch **gekennzeichnet**, daß die Verbindungsteile (25B, 26B) auf den Rahmen (11, 12, 15) und die ringförmigen Elemente (16B, 17B) aufgesetzt sind.

7. Auswuchtvorrichtung nach Anspruch 5, dadurch **gekennzeichnet**, daß der röhrenförmige Körper (13) parallele Abflachungen (29) in den Bereichen aufweist, in welchen die Verbindungsteile jeweils einander gegenüberliegend angeordnet sind (16 oder 17, Fig. 7).

8. Auswuchtvorrichtung nach einem der Ansprüche 5 und 7, dadurch **gekennzeichnet**, daß die Trennung zwischen den ringförmigen Endelementen (16, 17) und dem mittleren Element (15) durch zwei gegenüberliegende Radialschlitze (27) bestimmt ist, welche jeweils mit zwei die entsprechenden Seitenkanten eines jeden Paars von gegengleichen Verbindungsteilen bestimmenden Axialschlitzen (28) verbunden sind.

9. Auswuchtvorrichtung nach einem der Ansprüche 5 und 7, dadurch **gekennzeichnet**, daß der röhrenförmige Körper (13A) zwei Schnitte am Umfang aufweist, deren axiale Ausdehnung der axialen Länge der Verbindungsteile (25A, 26A ; Fig. 6) entspricht.

10. Auswuchtvorrichtung nach einem der Ansprüche 5 bis 9, dadurch **gekennzeichnet**, daß ein Anschlagelement (31, 31A ; 31B ; 31C ; 31D ; 36, 37, 38) für die Verformung der Verbindungsteile unter der bleibenden Verformungsgrenze vorgesehen ist.

11. Auswuchtvorrichtung nach Anspruch 10, dadurch **gekennzeichnet**, daß das Anschlagelement ein innen oder außen an dem röhrenförmigen Körper (13 ; 13A ; 13B) angeordneter Ring ist und das die Trennung zwischen dem mittleren Element (15) und den ringförmigen Elementen (15, 17 ; 16A, 17A ; 16B, 17B) des Lagerträgers überlappt.

12. Auswuchtvorrichtung nach Anspruch 10, dadurch **gekennzeichnet**, daß der Anschlagring von einem Lager (34D) des ringförmigen Elements des entsprechenden Lagerträgers gebildet wird (Fig. 11).

13. Auswuchtvorrichtung nach Anspruch 10 und 8, dadurch **gekennzeichnet**, daß jeder Radialschlitz (27) ein U-förmiges Teil aufweist, welches einen axial sich erstreckenden Zacken (36) für eine komplementäre Aussparung (37) bestimmt, wobei die Aussparung jeweils an der Verbindungsstelle von dem oder den ringförmigen Elementen (16,17) und dem mittleren Element (15) des röhrenförmigen Körpers (13) vorgesehen ist und daß das U-förmige Teil des Radialschlitzes zur Bestimmung des Anschlagelementes um 90° zu den entsprechenden Verbindungsteilen versetzt ist.

14. Auswuchtvorrichtung nach einem der vorgenannten Ansprüche, dadurch **gekennzeichnet**, daß die Antriebselemente (22, 24) ein Zahnradgetriebe (21, 23) aufweisen.

## Claims

1. Balancing machine for bodies to be rotatably driven, such as vehicle wheels, of the type comprising a shaft (19) rotatably mounted in bearings (18) which are fixed to a frame (11, 12) by means of elements (25, 26 ; 25A, 26A ; 25B, 26B), the shaft being coupled to driving means (22) enabling it to reach sufficient speed for the balancing of a wheel fixed to one of its ends (20), force measuring detectors (30) being fixed to the elements (25, 26 ; 25A, 26A ; 25B, 26B) which are elastically deformable and symmetrically disposed with respect to a diametrical plane of the shaft to enable the measurement of the imbalance to be corrected of the rotary body, this balancing machine being characterised in that the said elastically deformable elements (25, 26 ; 25A, 26A ; 25B, 26B) are axially disposed with respect to the shaft (19) in diametrically opposed respective positions and have longitudinal axes of symmetry located approximately in the same axial plane (P) defining a measuring plane in which the said elastically deformable elements have the lowest stiffness, while they have high stiffness in the axial plane perpendicular to the said measuring plane (P) in a manner which is known per se, and in that the direction of maximum sensitivity of the said measuring detectors (30) coincides with the said measuring plane (P) so as to eliminate any disturbing force oriented perpendicularly to the axial measuring plane.

2. Balancing machine according to Claim 1, characterised in that the said elastically deformable elements (25, 26 ; 25A, 26A ; 25B, 26B) are formed by connecting lugs extending between the said frame (11, 12, 15) and annular elements (16, 17 ; 16A, 17A; 16B, 17B) in which are respectively mounted the bearings (18) of the said shaft (19).

3. Balancing machine according to Claim 2, characterised in that the said annular elements (16, 17 ; 16A, 17A) are in one piece with the said connecting lugs (25, 26 ; 25A, 26A).

4. Balancing machine according to Claim 3, characterised in that the annular elements (16, 17 ; 16A, 17A) which support the bearing and the connecting lugs (25, 26 ; 25A, 26A) are in one piece with a median tubular element (15) which is integral with the frame.

5. Balancing machine according to Claim 4, characterised in that the tubular body (13, 13A) formed by the said annular elements and the said median element (15) have a circular section, the axis (X-X) of which coincides with that of the said shaft (19).

6. Balancing machine according to Claim 2, characterised in that the said connecting lugs (25B, 26B) are attached to the frame (11, 12, 15) and to the said annular elements (16B, 17B).

7. Balancing machine according to Claim 5, characterised in that the said tubular body (13) has parallel flat surfaces (29) in the areas where the respective diametrically opposed connecting lugs (16 or 17, Fig.17) are located

8. Balancing machine according to either of Claims 5 and 7, characterised in that the separation between the end annular elements (16, 17) and the median element (15) is defined by two diametrically opposed radial slots (27) each of which is joined to two axial slots (28) respectively defining lateral corresponding edges of each pair of diametrically opposed connecting lugs (25, 26).

9. Balancing machine according to either of Claims 5 and 7, characterised in that the said tubular body (13A) comprises two peripheral cut-away parts, the axial extent of which correspond to the axial length of the connecting lugs (25A, 26A ; Fig.6).

10. Balancing machine according to either of Claims 5 and 9, characterised in that it comprises an abutment element (31, 31A ; 31B 31C ; 31D ; 36, 37, 38) for maintaining the deformation of the said connecting lugs below their permanent deformation limit.

11. Balancing machine according to Claim 10, characterised in that the said abutment element is a ring disposed inside or outside the said tubular body (13 ; 13A ; 13B) and placed astride the separation between the said median element (15) and the said annular elements (15, 17, 16A, 17A ; 16, 17B) which support the bearing.

12. Balancing machine according to Claim 10, characterised in that the said abutment ring is formed by the bearing (34D) of the corresponding annular element which supports the bearing (Fig. 11).

13. Balancing machine according to Claim 10, when it depends from Claim 8, characterised in that each of the said radial slots (27) has a U-shaped portion defining a tongue (36) which extends in an axial manner into a complementary notch (37) respectively provided at the junction between the annular element of elements (16, 17) and the median element (15) of the tubular body (13) and this U-shaped portion of the said radial slot is angularly offset at 90° with respect to the said corresponding connecting lugs so as to define the said abutment element.

14. Balancing machine according to any one of the preceding Claims, characterised in that the said driving means (22, 24) comprise a gear train (21, 23).

FIG. 1

EP 0 119 123 B2

FIG.2

EP 0 119 123 B2

FIG. 12

FIG. 3

FIG. 4

FIG.5

FIG. 6

FIG.7

FIG. 8

FIG. 9

FIG. 10

FIG. 11